# EUROPÄISCHE PATENTSCHRIFT

(11) **EP 2 802 085 B1**
(45) Veröffentlichungstag und Bekanntmachung des Hinweises auf die Patenterteilung: **10.08.2016**
(21) Anmeldenummer: 13167222.2
(22) Anmeldetag: 10.05.2013
(51) Int. Cl.: H04B 5/00

(54) **Verbinder zwischen zwei Geräten zur Lebensmittelherstellung**
Connector between two devices for food production
Connecteur entre deux appareils de fabrication de produits alimentaires

(43) Veröffentlichungstag der Anmeldung: 12.11.2014
(73) Patentinhaber: Albert Handtmann Maschinenfabrik GmbH & Co. KG, 88400 Biberach (DE)
(72) Erfinder: Schrader, Wolfgang, 88400 Biberach (DE); Miller, Lothar, 88483 Burgrieden - Rot (DE)
(74) Vertreter: Grünecker Patent- und Rechtsanwälte PartG mbB

(56) Entgegenhaltungen:
- EP-A1- 1 312 264
- EP-A1- 1 885 085
- EP-A2- 1 623 628
- EP-A2- 2 073 315
- US-A- 5 572 441

## Beschreibung

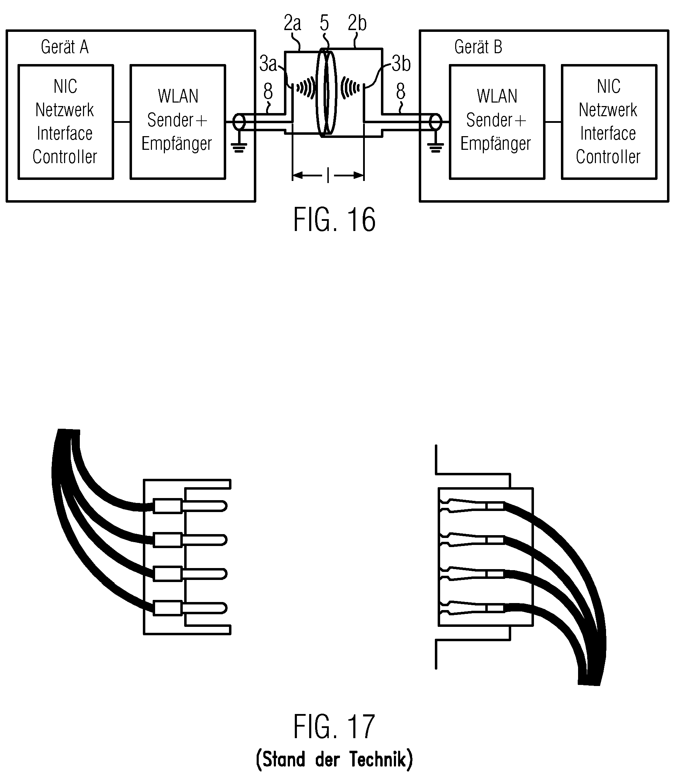

Die vorliegende Erfindung betrifft eine Füllmaschine mit einem Verbinder zur Datenübertragung, z.B. für Ethernet-basierte Feldbussysteme, an einer Schnittstelle zwischen zwei Geräten, insbesondere zur Prozessdatenübertragung zwischen zwei Geräten zur Lebensmittelherstellung, vor allem von Fleisch und Wurstwaren. < Einschub von S. 1 a>Bei der Lebensmittelherstellung, insbesondere bei der Fleisch- und Wurstwarenherstellung, gibt es in einer Produktionslinie mehrere einzelne Geräte, deren Funktionen aufeinander abgestimmt werden müssen. Bei der Prozessdatenübertragung für ethernetbasierte Feldbussysteme werden bislang herkömmliche Kabel und Stecker verwendet, wie beispielsweise in der Fig. 17 dargestellt ist. Kabel und Stecker führen bei Maschinen in rauer Umgebung häufig zu Störungen, Stillständen und Ausfällen.

Bei elektrischen Steckverbindern ist im ungesteckten Zustand besonders der Steckerpin und der zugehörige Buchsenkontakt anfällig für mechanische Beschädigung, Verschmutzung und Korrosion. Bei den meisten am Markt erhältlichen Steckverbindern kann im ausgesteckten Zustand sogar Wasser oder Reinigungschemikalien durch den Steckverbinder in das Kabel eindringen und dieses durch Korrosion nachhaltig schädigen. Auch der Übergang vom Steckerpin bzw. Buchsenkontakt zum Kabel ist wegen der unterschiedlichen Materialien stark oxidationsgefährdet. Das führt dann zu hohen Übergangswiderständen und Kriechströmen.

Als Alternative für eine Prozessdatenübertragung mit Hilfe von Kabeln wird derzeit auch eine Datenübertragung mittels WLAN oder Bluetooth verwendet.

Aber auch diese Lösung weist insofern Nachteile auf, als dass sie relativ langsam ist gegenüber Kabelverbindungen und vor allem anfällig gegen Funkstörungen. Außerdem ergibt sich insbesondere bei mehreren Sendern der Nachteil, dass der Empfänger auf den gewünschten Sender eingestellt werden muss, was einen erheblichen Konfigurationsaufwand und Fehlerquellen mit sich bringt. Nur wenige Funkfrequenzen sind verfügbar. Wenn innerhalb der Reichweite mehrere Sender und Empfänger betrieben werden, gibt es Störungen durch benachbarte Sender. Die Bandbreite muss mit anderen Geräten geteilt werden. Falls die verfügbare Bandbreite nicht ausreicht, können die Geräte nicht gleichzeitig betrieben werden. Ein passender Funkkanal muss ausgewählt und eingestellt werden. Die zeitliche Aufteilung der Übertragungskapazität spielt ebenfalls eine Rolle, so dass auf freie Kanäle gewartet werden muss und darüber hinaus kostet die Wiederholung der Übertragung bei gestörtem Empfang Zeit. Auch das Wechseln des Kanals bei neu auftretenden Störungen kostet Zeit. Darüber hinaus kann auch nicht vorhergesagt werden, wie lange eine erfolgreiche Übertragung dauert. Insgesamt kann keine Prozessdatenübertragung in Echtzeit vorgenommen werden.

Die EP 1 885 085 A1 zeigt bereits eine berührungslose Energie- und Datenversorgung von Busteilnehmern. Busteilnehmer sind beispielsweise Logikeinheiten, Signaleinheiten, Zähleinheiten, Kleinsteuerungen. Diese Einheiten werden hier auch als Gerät bezeichnet und sind relativ kleiner Bauart und beispielsweise in Schaltschränken untergebracht. Die Kommunikation zwischen einzelnen Einheiten kann galvanisch getrennt realisiert werden.

Die EP 2 073 315 A2 beschreibt ebenfalls eine Vorrichtung zum galvanisch getrennten Koppeln von mehreren Busteilnehmern, die an einer Tragschiene lösbar befestigt sind.

Die Druckschrift US 5,572,441 zeigt einen Verbinder mit einem Kabel mit einem ersten und zweiten Verbindungselement, wobei die Verbinung kapazitiv erfolgt. Der Verbinder koppelt Laptop-Computer mit stationären Einheiten.

Das Dokument EP-A-1312264 offenbart eine Vorrichtung zur Wurstherstellung.

Hiervon ausgehend liegt der vorliegenden Erfindung die Aufgabe zugrunde, eine Fülllinie mit einem Verbinder zur Datenübertragung, insbesondere zwischen zwei Geräten zur Lebensmittelherstellung, vor allem von Fleisch und Wurstwaren, bereitzustellen, die eine zuverlässige Datenübertragung in Echtzeit ermöglichen und darüber hinaus robust ausgebildet werden können, damit sie der rauen Umgebung, wie sie insbesondere bei der Lebensmittelherstellung herrscht, standhalten können.

Erfindungsgemäß wird diese Aufgabe durch die Merkmale des Anspruchs 1 gelöst.

Gemäß der vorliegenden Erfindung weist der Verbinder zur Datenübertragung an einer Schnittstelle zwischen zwei Geräten zur Lebensmittelherstellung, vor allem von Fleisch und Wurstwaren, ein erstes Verbindungselement auf, das mit dem ersten Gerät verbindbar ist und mindestens ein erstes Datenübertragungsteil aufweist sowie ein zweites mit dem ersten Verbindungselement koppelbares Verbindungselement, das mit dem zweiten Gerät verbindbar ist und mindestens ein zweites Datenübertragungsteil aufweist. Das erste Datenübertragungsteil ist von dem zweiten Datenübertragungsteil in gekoppeltem Zustand des ersten und zweiten Verbindungselements galvanisch getrennt, derart, dass die Datenübertragung vom ersten Verbindungselement zum zweiten Verbindungselement galvanisch getrennt, also draht- und kontaktlos erfolgt. Zur galvanisch getrennten Datenübertragung können verschiedene Bauteile, wie Transformatoren, Kondensatoren, Optokoppler, Antennen, Richtantennen, optische Sender und Empfänger, etc. verwendet werden.

Die vorliegende Erfindung bringt den Vorteil mit sich, dass nun im Vergleich zu herkömmlichen Steckern keine Steckerpins bzw. Buchsenkontakte mehr notwendig sind, die sehr störanfällig sind. Störungen, Stillstände und Ausfälle können minimiert werden. Weiter vorteilhaft ist, dass bei der galvanisch getrennten Datenübertragung und der Integration des Datenübertragungsteils in ein Verbindungselement, z.B. einem Gehäuse eines Verbindungselements, zur Datenübertragung keine offenen metallischen Kontakte mehr nötig sind. Somit ist der erfindungsgemäße Verbinder sehr robust in Bezug auf Verschmutzung und Feuchtigkeit, so dass die oben beschriebenen Kontaktprobleme vermieden werden können. Der erfindungsgemäße Verbinder ermöglicht darüber hinaus eine Datenübertragung in Echtzeit.

Vorteilhafterweise umfasst der Verbinder eine mechanische Befestigungseinrichtung, die das erste Verbindungselement, insbesondere dessen Gehäuse, mit dem zweiten Verbindungselement, insbesondere dessen Gehäuse, koppelt. Die mechanische Befestigungseinrichtung kann insbesondere einen Schraubverschluss, eine Steckverbindung, einen Bajonettverschluss, einen Klemmverschluss oder Permanentmagneten umfassen.

Es ist ganz besonders vorteilhaft, wenn die Befestigungseinrichtung die Verbindungselemente bzw. deren Gehäuse hermetisch dicht koppelt, so dass die Datenübertragungsteile in dem verbundenen ersten und zweiten Verbindungselement vor Feuchtigkeit und Schmutz geschützt sind, selbst wenn Teile der Datenübertragungsteile in dem Verbindungselement offen liegen.

Es ist ganz besonders vorteilhaft, wenn das erste und zweite Datenübertragungsteil jedoch bereits in dem ersten und zweiten Verbindungselement hermetisch abgedichtet angeordnet sind. Dann sind die Datenübertragungsteile selbst dann ausreichend vor Feuchtigkeit, Schmutz und mechanischen Beschädigungen geschützt, wenn sich der Verbinder im geöffneten Zustand befindet.

Dazu kann das erste oder zweite oder beide Datenübertragungsteile in ein Mantelmaterial eingegossen sein. Das Mantelmaterial ist vorzugsweise elektrisch isolierend.

Als Mantelmaterial eignet sich insbesondere ein thermoplastischer Kunststoff, wie z. B. Polyamid, Polyester oder Polyethylen. Aber auch Ein- oder Zweikomponenten-Vergussmasse z. B. Epoxydharz, Polyesterharz, Vinylesterharz, Polyurethan, Silikonharz, Acrylharz, wahlweise mit Füllstoffen, wie z. B. Glasfaser, ist möglich.

Gemäß einem bevorzugten Ausführungsbeispiel kann das erste Verbindungselement als Datenübertragungsteil eine Primärspule umfassen und das zweite Verbindungselement als Datenübertragungsteil eine Sekundärspule, derart, dass die Daten induktiv übertragen werden. Somit ergibt sich beim Koppeln des ersten und zweiten Verbindungselements ein Übertrager, der die Primärspule und die Sekundärspule umfasst. Dabei können die Kerne der Spulen halbringförmig ausgebildet sein, derart, dass beim Zusammenfügen der Verbindungselemente sich die Stirnseiten gegenüber liegen, wobei gegebenenfalls noch jeweils eine Schutzschicht über den Stirnseiten des Kerns angeordnet ist.

Unter eingegossen versteht man, dass das jeweilige Datenübertragungsteil entweder komplett eingegossen und umschlossen ist oder dass beispielsweise Abschnitte, wie etwa eine Kondensatorelektrode oder ein Abschnitt des Spulenkerns freiliegt, wobei dann entsprechende Abschnitte gegebenenfalls noch mit einer Schutzschicht überzogen werden können.

Gemäß einem bevorzugten Ausführungsbeispiel entspricht die Primärspule und die Sekundärspule jeweils einer Hälfte eines Übertragers, dessen Kern, insbesondere Ringkern, zweiteilig ist, derart, dass die jeweiligen Stirnseiten der getrennten Kerne der Primär- und Sekundärspule in gekoppeltem Zustand des ersten und zweiten Verbindungselements zueinander ausgerichtet sind und vorzugsweise aneinander liegen. Wenn die Primärspule und Sekundärspule entsprechend aufgebaut sind, ist die Herstellung des Verbinders sehr einfach.

Gemäß einer weiteren Ausführungsform können das erste Verbindungselement und das zweite Verbindungselement derart ausgebildet sein, dass die Daten kapazitiv übertragen werden, wobei das erste Verbindungselement als Datenübertragungsteil mindestens zwei erste Kondensatorelektroden und das zweite Verbindungselement als Datenübertragungsteil mindestens zwei zweite Kondensatorelektroden umfasst, wobei sich die ersten und zweiten Kondensatorelektrode in gekoppeltem Zustand der Verbindungselemente gegenüberliegen.

Weil beispielsweise bei Ethernet-basierten Übertragungsstrecken die Informationen differenziell ohne Gleichspannungsbezug übertragen werden, können ohne Weiteres Kondensatoren zur Leitungstrennung eingefügt werden. Im Kondensator wird die Information durch ein elektrisches Feld weitergegeben. Ein Kondensator kann aus zwei voneinander isolierten Elektroden aufgebaut werden und so eine hermetisch dichte Trennstelle erzeugt werden. Ein weiteres Eingießen der jeweiligen Kondensatorelektroden ist ebenfalls möglich. Beim Zusammenfügen des ersten und zweiten Verbindungselements werden dann die Kondensatorelektroden wieder mit geringem Abstand von z. B. 1 mm zueinander ausgerichtet, so dass das elektrische Feld wieder geschlossen ist und die Information somit ungehindert übertragen werden kann.

Gemäß einer bevorzugten Ausführungsform sind in dem ersten Verbindungselement mehrere Kondensatorelektroden flächig, insbesondere als flächige Ringe auf einem Träger, insbesondere einem Zylinder, angeordnet. Das zweite Verbindungselement ist dann als Hülse ausgebildet, die mehrere flächige, insbesondere als flächige Ringe ausgebildete Kondensatorelektroden aufweist. Im gekoppelten Zustand der Verbindungselemente, d.h. wenn hier insbesondere der Träger in die Hülse geschoben und befestigt wird, liegen die ersten Kondensatorelektroden den zweiten Kondensatorelektroden gegenüber.

Gemäß einer weiteren Ausführungsform erfolgt die Datenübertragung über elektromagnetische Wellen, wobei insbesondere das erste Verbindungselement als Datenübertragungsteil einen Sender umfasst und das zweite Verbindungsteil als Datenübertragungsteil einen Empfänger umfasst. Als Sender und Empfänger können dabei beispielsweise jeweils Sender- und Empfängerantennen verwendet werden oder aber auch kombinierte Sender-Empfänger-Antennen. Diese Antennen sind im Falle einer Funkübertragung für Frequenzen von 2 - 100 GHz geeignet. Im Falle einer Übertragung mit vorzugsweise kohärentem Licht, z. B. in einem Wellenlängenbereich 400 - 1000 nm kann der optische Sender beispielsweise eine Leuchtdiode (LED) oder Laserdiode sein und der optische Empfänger beispielsweise ein Fototransistor oder eine PIN-Diode.

Es ist vorteilhaft, wenn das erste und zweite Verbindungselement jeweils mehrere Datenübertragungsteile für mehrere Übertragungspfade aufweisen, insbesondere mehrere Spulen, mehrere Kondensatorelektroden, mehrere Sender oder Empfänger. Ferner kann der Verbinder auch noch einen Pfad für die Energieübertragung umfassen.

Somit ermöglicht der Verbinder ein drahtloses und kontaktloses Übertragungsverfahren von Daten.

Gemäß der vorliegenden Erfindung sind das erste und zweite Gerät mindestens zwei Geräte aus folgender Gruppe: Füllmaschine, Abdreheinheit, Clipper, Hänger, Abteilelement, Transport-band, Handlingsgerät, Verpackungseinheit. Insbesondere bei der Wurstherstellung können dann die einzelnen Komponenten gut und sicher über den erfindungsgemäßen Verbinder verbunden werden, wobei auch beim Umrüsten oder Austauschen und Reinigen von einzelnen Geräten innerhalb einer Linie, die Verbinder ausreichend geschützt sind.

Gemäß der vorliegenden Erfindung ist mindestens eines der Verbindungselemente oder aber beide über ein Kabel mit einem entsprechenden Gerät verbunden sein. Es ist jedoch auch möglich, ein Verbindungselement in das Gerät als Anschlussschnittstelle zu integrieren. Die Kabel können hermetisch dicht mit den Verbindungselementen bzw. deren Gehäuse verbunden werden.

Die Erfindung betrifft eine Fülllinie zur Wurstherstellung mit mehreren Geräten, d.h. mit mindestens zusätzlich einem Vorsatzgerät, wie es zuvor beschrieben wurde. Mindestens zwei Geräte der ganzen Fülllinie sind dann mit einem erfindungsgemäßen Verbinder verbunden.

Bei einem Verfahren zum Übertragen von Daten von einem ersten Gerät zu einem zweiten Gerät in einer Füllmaschine mit Hilfe des erfindungsgemäßen Verbinders werden zunächst das erste und zweite Verbindungselement mit der mechanischen Befestigungseinrichtung miteinander verbunden, wobei dann die Datenübertragung vom ersten zum zweiten Verbinder galvanisch getrennt erfolgt, d.h. beispielsweise induktiv, kapazitiv, optisch oder über elektromagnetische Wellen.

Die vorliegende Erfindung wird nachfolgend unter Bezugnahme der folgenden Figuren näher erläutert.
- Fig. 1: zeigt grob schematisch eine Seitenansicht einer Fülllinie gemäß der vorliegenden Erfindung.
- Fig. 2: zeigt schematisch eine Netzwerkverbindung gemäß dem Stand der Technik.
- Fig. 3: zeigt die in Fig. 2 gezeigte Netzwerkverbindung mit zusätzlichem Übertrager.
- Fig. 4: zeigt die in Fig. 3 gezeigte Netzwerkverbindung mit eingefügter Trennstelle.
- Fig. 5: zeigt einen Verbinder gemäß der vorliegenden Erfindung zur induktiven Datenübertragung.
- Fig. 6: zeigt grob schematisch das Prinzip eines Verbinders gemäß der vorliegenden Erfindung mit mehreren Übertragungspfaden.
- Fig. 7: zeigt einen Querschnitt durch einen vorderen Abschnitt eines erfindungsgemäßen Verbinders mit zwei Datenübertragungsteilen.
- Fig. 8: zeigt einen Längsschnitt durch einen erfindungsgemäßen Verbinder.
- Fig. 9: zeigt einen Querschnitt durch einen erfindungsgemäßen Verbinder mit vier Datenübertragungsteilen.
- Fig. 10: zeigt einen herkömmlichen Netzverbindungsaufbau.
- Fig. 11: zeigt den in Fig. 10 gezeigten Netzwerkverbindungsaufbau mit eingefügtem Kondensator.
- Fig. 12: zeigt die in Fig. 11 gezeigte Netzwerkverbindung mit aufgetrenntem Kondensator.
- Fig. 13: zeigt einen Verbinder gemäß der vorliegenden Erfindung, bei dem die Daten kapazitiv übertragen werden.
- Fig. 14: zeigt schematisch das Prinzip eines Verbinders mit mehreren Übertragungspfaden.
- Fig. 15: zeigt perspektivisch und schematisch eine bevorzugte Ausführungsform eines Verbinders zur kapazitiven Datenübertragung mit mehreren Kondensatoren.
- Fig. 16: zeigt eine weitere Ausführungsform eines Verbinders zur Datenübertragung mittels elektromagnetischer Wellen.
- Fig. 17: zeigt eine Steckverbindung zur Datenübertragung gemäß dem Stand der Technik.

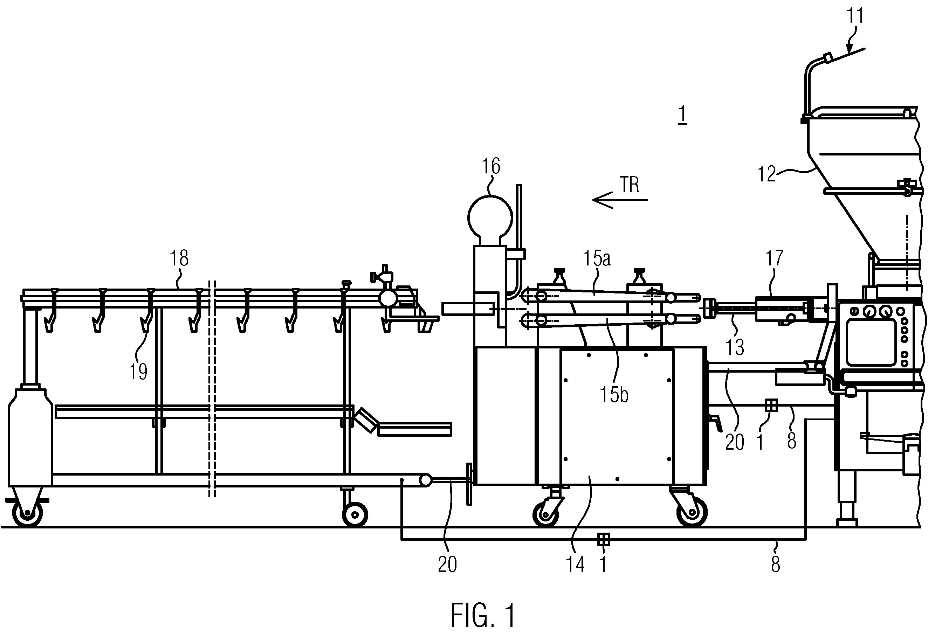

Fig. 1 zeigt in schematischer Darstellung eine Füllmaschine 11 mit mehreren Vorsatzgeräten. Die Füllmaschine 11 weist in bekannter Weise einen Trichter 12 auf, in den beispielsweise pastöse Masse, wie Wurstbrät, eingefüllt wird und über ein nicht dargestelltes Förderwerk durch ein Füllrohr 13 in eine Wursthülle ausgestoßen wird. Der Füllmaschine 11 ist beispielsweise eine Transporteinrichtung 14 in Transportrichtung TR nachgeschaltet, die zwei umlaufende Förderbänder 15a, 15b aufweist, zwischen denen der gefüllte Wurststrang transportiert wird. Die Transporteinrichtung kann den gefüllten Wurststrang auch gegen Verdrehen halten, wenn der gefüllte Wurststrang durch eine Abdreheinheit 17 in Rotation versetzt wird, um eine Abdrehstelle zu erzeugen.

Ferner kann in der Linie auch ein Clipper 16 angeordnet sein, zum Setzen eines Klipps zwischen zwei Wurstportionen. Schließlich ist bei diesem speziellen Beispiel auch ein Hänger 18 angeordnet, der an seinen Haken 19 einzelne Würste oder Wurstportionen aufnehmen und weitertransportieren kann.

Der in Fig. 1 gezeigte Aufbau ist nur ein Beispiel. Einzelne Geräte einer Fülllinie können mit mechanischen Verbindern 20 miteinander verbunden werden. Zur Prozessdatenübertragung sind hier Kabel 8 vorgesehen, die mit den erfindungsgemäßen Verbindern 1, wie sie nachfolgend noch näher beschrieben werden, verbunden sind. Bei diesem Beispiel ist der Hänger 18 über das Kabel 8 mit einem Verbinder 1 mit der Steuerung der Füllmaschine 11 verbunden. Auch die Transporteinrichtung 14 ist über ein Kabel 8 mit einem entsprechenden Verbinder 1 mit der Steuerung der Füllmaschine verbunden. Es könnte z.B. auch die Transporteinrichtung mit dem Hänger 8 über ein Kabel mittels Verbinder 1 verbunden sein.

Um den rauen Bedingungen bei der Lebensmittelproduktion Rechnung zu tragen, wird für eine entsprechende Füllmaschine bzw. eine entsprechende Fülllinie ein Verbindersystem zur Datenübertragung an einer Schnittstelle zwischen zwei Geräten vorgeschlagen, das wie folgt aufgebaut sein kann.

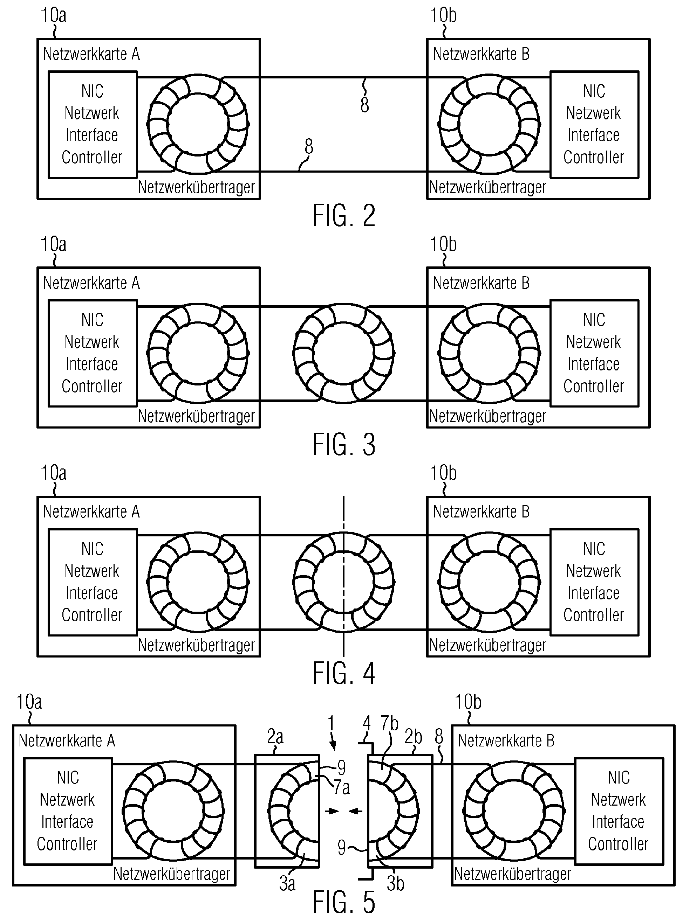

Bei der vorliegenden Erfindung weist der Verbinder 1, wie insbesondere aus Fig. 5 hervorgeht, ein erstes Verbindungselement 2a auf und ein zweites Verbindungselement 2b, die zur Verbindung der Datenleitungen miteinander gekoppelt werden können, wie dies auch früher im Fall von herkömmlichen Steckern war.

Die Verbindungselemente weisen Datenübertragungsteile 3a und 3b auf, wobei diese Datenübertragungsteile derart ausgebildet sind, dass im gekoppelten bzw. verbundenen Zustand des ersten und zweiten Verbindungselementes die Datenübertragungsteile 3a,b galvanisch getrennt (d.h. also kontaktlos) sind. Hier in diesem ersten Ausführungsbeispiel erfolgt die galvanische Trennung durch zwei voneinander elektrisch isolierte Wicklungen und die Datenübertragung erfolgt induktiv. Dabei weist das erste Verbindungselemente 2a als Datenübertragungsteil eine Primärspule 3a auf, die einen Kern 7a umfasst. Der Kern 7 ist gekrümmt und weist jeweils zwei Stirnseiten 9 auf, die einem gegenüberliegenden Verbindungselement zugewandt sein können. Das zweite Verbindungselement 2b weist eine entsprechende Sekundärspule 3b auf.

Beim Zusammenfügen der Primär- und Sekundärspule, d.h. beim Koppeln des ersten und zweiten Verbindungselements, funktionieren die beiden Spulenhälften dann wie ein Netzwerkübertrager.

Für die induktive Übertragung können dabei bestehende Ethernetstandards nach IEEE 802.3 genutzt werden. Die Erfindung beruht daher auf der Grundlage folgender Überlegung.

Wie in Fig. 2 gezeigt ist, wird bei z.B. Ethernet-basierten Übertragungsstrecken sowohl auf der Sender- als auch auf der Empfängerseite zur Potenzialtrennung ein Übertrager (Transformator) verwendet. Vom Übertrager wird die Information durch ein magnetisches Feld weitergegeben. Fig. 2 zeigt eine Netzwerkkarte A eines ersten Geräts 10a sowie eine Netzwerkkarte B eines zweiten Geräts 10b, wobei jeweils Netzwerk-Interface-Controller vorgesehen sind. Die Netzwerkkarten weisen herkömmliche Netzwerkübertrager, wie zuvor beschrieben, auf. Über Leitungen bzw. Kabel 8 können die Netzwerkübertrager der Geräte 10a,b miteinander verbunden werden.

Weil bei, insbesondere Ethernet-basierten, Übertragungsstrecken sowohl auf der Sender- als auch auf der Empfängerseite die Übertrager zur Potenzialtrennung verwendet werden, kann ohne weiteres noch ein zusätzlicher Übertrager in die Strecke eingefügt werden, wie in Fig. 3 dargestellt ist. Der zusätzliche Übertrager kann in zwei Hälften aufgetrennt und aufgeschnitten werden, wie in Fig. 4 dargestellt ist.

Nach Zusammenfügen der Trennstelle wird das Magnetfeld wieder geschlossen und die Information kann ungehindert übertragen werden.

Das Datenübertragungsteil 3a,b kann also einfach erzeugt werden, indem ein herkömmlicher, beispielsweise dem Ethernetstandard genügender Übertrager in zwei Teile aufgetrennt wird oder ein Übertrager aus zwei Halbkernen zusammengefügt wird.

Diese Datenübertragungsteile können dann in den jeweiligen Verbindungselementen 2a,b integriert werden. Die Primär- und Sekundärspule können dabei in ein Mantelmaterial, z. B. Kunstharz oder thermoplastische Kunststoffe eingegossen sein. Die Spulen werden komplett eingegossen, derart, dass auch eine dünne Schicht auf der Stirnfläche 9 der Kerne 7a,b ausgebildet ist. Diese Schicht sollte jedoch nicht dicker als 0,2 mm sein, um eine einwandfreie Datenübertragung zu gewährleisten. Es ist auch möglich, dass die Spulen 3a,b so eingegossen sind, dass die Stirnseiten 9 der Kerne 7a,b freiliegen. Dann können beim Verbinden der Verbindungselemente die Stirnseite der Kerne exakt aufeinandergebracht werden. Die Wicklungen der Spule sind dennoch ausreichend im geöffneten Zustand vor Feuchtigkeit und Schmutz geschützt. Es ist auch möglich, die freiliegenden Stirnseiten 9 der Kerne 7a,b durch eine dünne Beschichtung auf der Verbindervorderseite (die dem gegenüberliegenden Verbindungselement zugewandt ist) abzudichten. Als solche dünne Schicht kann beispielsweise eine Folie mit einer Dicke von 20 µm bis 300 µm verwendet werden. Die Spulen, d.h. die gewundenen Leitungsdrähte, sind auf jeden Fall hermetisch abgedichtet in den Verbindungselementen angeordnet.

Die Verbindungselemente 2a,b weisen eine mechanische Befestigungseinrichtung 4 auf, über die das erste Verbindungselement 2a mit dem zweiten Verbindungselement 2b gekoppelt werden kann, wie beispielsweise schematisch in Fig. 5 angedeutet ist. Eine solche mechanische Befestigungseinrichtung kann beispielsweise einen Schraubverschluss, eine Steckverbindung, einen Bajonettverschluss, eine Klemmvorrichtung oder Permanentmagnete aufweisen. Es ist besonders vorteilhaft, wenn die Befestigungseinrichtung 4 derart ausgebildet ist, dass eine hermetisch dichte Verbindung zwischen den Verbindungselementen 2a,b entsteht. Dies bringt zusätzlichen Schutz.

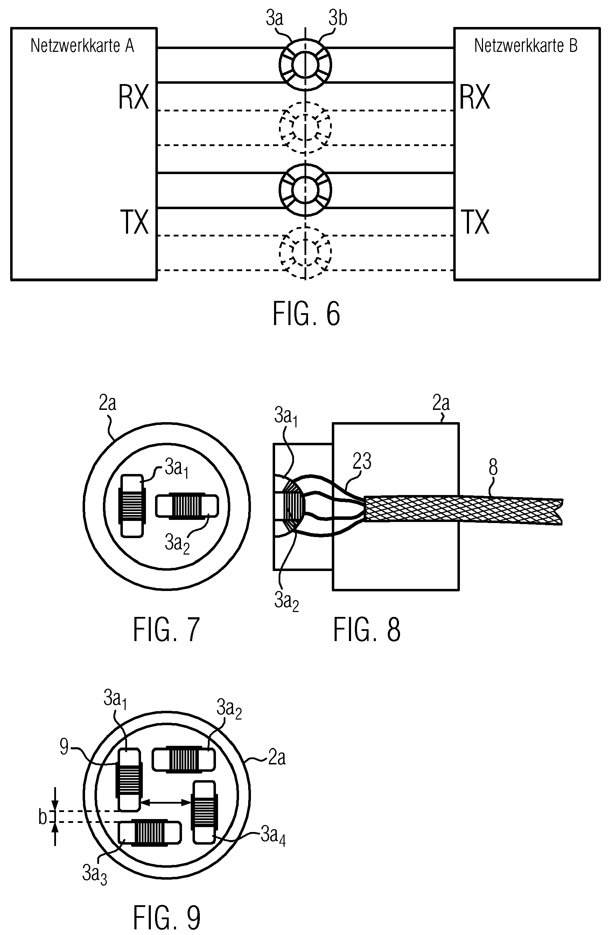

In den Funktionsskizzen in Fig. 2 bis 5 wurde immer nur ein Übertragungspfad gezeigt. Für eine Ethernetverbindung sind aber beispielsweise mindestens jeweils ein Sende- und Empfangskanal (bis 100 MBit/s) oder sogar je zwei Sende- und Empfangskanäle (Gigabit-Ethernet) nötig. Fig. 6 zeigt nun grob schematisch jeweils zwei Sende- und Empfangskanäle zwischen den Netzwerkkarten A und B mit insgesamt 4 Übertragern bzw. 8 Übertragerhälften.

Die mehreren Übertragerhälften bzw. Spulen werden, wie beispielsweise in Fig. 7 darstellt, so an der Steckervorderfläche ausgerichtet, dass sich die magnetischen Streufelder gegenseitig nicht beeinflussen.

Fig. 7 zeigt zwei nebeneinander angeordnete erste Primärspulen 3a1, 3a2, die senkrecht zueinander angeordnet sind. Fig. 8 zeigt einen Längsschnitt einer entsprechenden Ausgestaltung mit zwei senkrecht zueinander stehenden Spulen 3a1 sowie 3a2, die jeweils mit den entsprechenden Signalleitungen 23 verbunden sind und in ein Kabel 8 münden. Zum besseren Schutz sind auch die Signalleitungen 23 sowie das Kabel 8 mit in dem Verbindungselement 2a eingegossen. Fig. 9 zeigt eine Vorderansicht eines Verbindungselements 2a mit vier Primärspulen, wobei der Abstand von zwei Spulen, die unter gleichem Winkel ausgerichtet sind, größer ist als der Abstand von zwei Spulen, die um etwa 90° zueinander versetzt angeordnet sind. Durch diese Anordnung ergibt sich ein kompakter Aufbau mit geringer gegenseitiger Beeinflussung.

Die entsprechenden zweiten Verbindungselemente 2b sind dann so ausgebildet, dass die jeweiligen Stirnseiten 9 der einzelnen Kerne 7 bei Verbinden der Verbindungselemente 2a,b gegenüberliegen.

Als Grundlage für den Verbinder wird beispielsweise ein Übertrager mit folgenden Kenndaten verwendet: Induktivität 350 µH bei 100 kHz, 100 mV AC, 8 mA DC, Windungsverhältnis 1:1.

Bei solchen Übertragern sollte der Abstand a zwischen zwei Spulen, die im Wesentlichen in gleicher Richtung, also parallel zueinander ausgerichtet sind, in einem Bereich von 5 bis 10 mm liegen. Der Abstand b zwischen zwei Spulen, die im Wesentlichen senkrecht zueinander ausgerichtet sind, sollte in einem Bereich von 2 bis 5 mm liegen.

Dieses Ausführungsbeispiel bringt den Vorteil mit sich, dass es nicht nötig ist, ein spezielles Protokoll einzusetzen, das Adressierung, Frequenzwechsel, Wiederholung oder Kollisionserkennung beherrscht. Es wird auch kein spezielles Modulationsverfahren benötigt. Eine Datenübertragung in Echtzeit ist möglich.

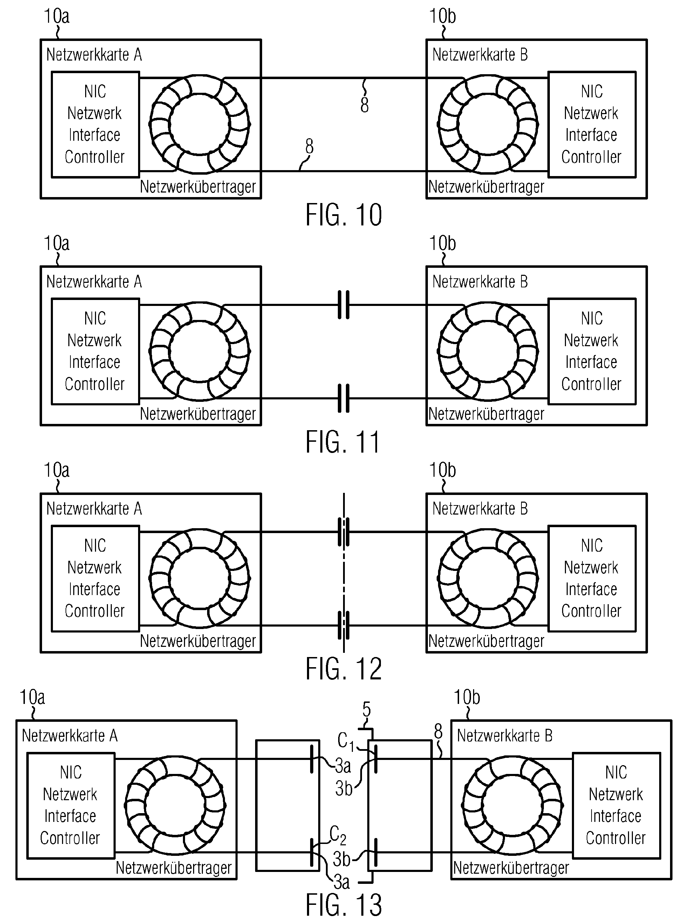

Im Zusammenhang mit den Fig. 10 bis 15 wird eine weitere Ausführungsform gemäß der vorliegenden Erfindung näher erläutert, bei der die Datenübertragung mit einem elektrischen Feld, also kapazitiv, erfolgt. Dieses Ausführungsbeispiel entspricht dem im Zusammenhang mit den Fig. 2 bis 9 gezeigten Ausführungsbeispiel mit der Ausnahme, dass es nun statt der primären und sekundären Spule 3a,b jeweils zwei Kondensatorelektroden 3a,b aufweist. Auch für die kapazitive Übertragung können bestehende Ethernet-Standards nach IEEE 802.3 genutzt werden.

Weil bei z.B. Ethernet-basierten Übertragungsstrecken die Informationen differenziell ohne Gleichspannungsbezug übertragen werden, können ohne weiteres Kondensatoren zur Leitungstrennung eingefügt werden.

Im Kondensator wird die Information durch ein elektrisches Feld weitergegeben. Ein Kondensator kann durch zwei elektrisch isolierte Elektroden hergestellt und so eine hermetisch dichte Trennstelle erzeugt werden. Durch Annäherung der beiden Elektroden wird das elektrische Feld geschlossen und die Information kann ungehindert übertragen werden, wie nachfolgend noch näher erläutert wird. Die Kondensatorelektroden können dabei jeweils vollständig in ein elektrisch isolierendes Mantelmaterial eingebettet, insbesondere eingegossen sein, wie beispielsweise in Kunstharz oder einem thermoplastischen Kunststoff.

Die Fig. 10 bis 12 machen deutlich, dass zwischen zwei Netzwerkübertragern ein Kondensator zwischengeschaltet werden kann, wobei dann die beiden Datenübertragungsteile durch einfaches Auftrennen des Kondensators erhalten werden können.

Die Kenngrößen des verwendeten Kondensators sind beispielsweise: C = 5 bis 50 nF.

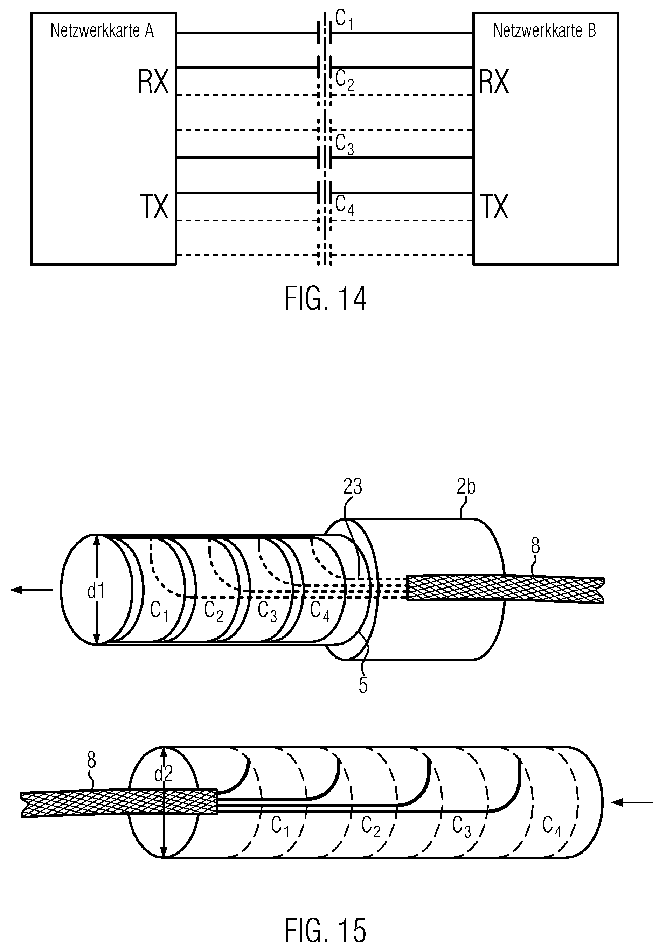

In den Funktionsskizzen 10 bis 13 wurde bisher immer nur ein Übertragungspfad gezeigt. Für eine Ethernetverbindung sind aber mindestens jeweils ein Sende- und ein Empfangskanal (bis 100 MBit/s) oder gar je zwei Sende- und Empfangskanäle nötig. Fig. 14 zeigt zwei Netzwerkkarten A, B von zwei verschiedenen Geräten grob schematisch mit jeweils einem Sende- und einem Empfangskanal, wobei der Sende- und Empfangskanal jeweils zwei Kondensatoren C1, C2 bzw. C3, C4 aufweist.

Fig. 15 zeigt eine spezielle Ausführungsform der kapazitiven Datenübertragung. Die dargestellten Kondensatoren C1 bis C4 sind hier z.B. als flächige Ringe auf einen Zylinder aufgebracht. Die Elektrodenflächen sind mit entsprechenden Signalleitungen 23, die innerhalb des Zylinders verlaufen, verbunden. Als Schutz kann auf die Oberflächen der Kondensatorelektroden eine Schutzschicht aufgebracht werden, beispielsweise in Form einer Folie, eines Schrumpfschlauchs oder Schutzlack .

Als Gegenstück ist das Verbindungselement 2a vorgesehen, das als Hülse ausgebildet ist, derart, dass das Verbindungselement 2b zumindest teilweise in diese Hülse 2a eingeschoben werden kann, wobei der Durchmesser d₂ größer als der Durchmesser d₁ ist. An der inneren Oberfläche der Hülse sind ebenfalls ringförmige Kondensatorelektroden der Kondensatoren C1 bis C4 angebracht, wobei im gekoppelten Zustand der Verbindungselemente 2a,b die Elektroden der Hülse jeweils beabstandet gegenüberliegen. Der Verbinder weist eine mechanische Befestigungseinrichtung auf, die mit 5 angedeutet ist, beispielsweise eine Steckverbindung, über die die Hülse zum Zylinder ausgerichtet werden kann und über die eine hermetisch dichte Verbindung hergestellt werden kann. Die Kondensatorelektrodenoberflächen der Hülse können ebenfalls zum Schutz beschichtet sein, beispielsweise mit einer 50 µm bis 200 µm starken Folie oder Isolierschicht. Auch hier sind die Kabel 8 in die Verbindungselemente 2a,b eingegossen. Die Kapazität des Kondensators beträgt geeigneter weise 5 nF bis 50 nF.

Fig. 16 zeigt eine weitere Ausführungsform der vorliegenden Erfindung, wobei die Daten hier über elektromagnetische Wellen übertragen werden. Der in Fig. 16 gezeigte Aufbau entspricht dem Aufbau der vorherigen Ausführungsbeispiele, wobei hier als Datenübertragungsteil ein Sender 3a und ein Empfänger 3b verwendet wird. Im Falle einer Funkübertragung (Frequenzbereich 2 GHz bis 100 GHz) können entsprechende Antennen (Sender- und/oder Empfängerantennen) 3a,b verwendet werden. Der Abstand I zwischen den Antennen in einem geschlossenen Zustand des Verbinders liegt in einem Bereich von 1 mm bis 20 mm. Die Antennen sind in dem ersten und zweiten Verbindungselement integriert. Die Antennen 3a,b können in dem Verbindungselement eingegossen sein, was zusätzlichen Schutz gewährleistet. Alternativ oder zusätzlich kann die Befestigungseinrichtung die beiden Verbindungselemente hermetisch dicht verbinden. Durch die geringe Distanz zwischen den Antennen 3a,b und die korrekte gleichbleibende Ausrichtung der Antennen kann eine exakte Datenübertragung realisiert werden. Dadurch, dass die Antennen in dem Verbindungselement, insbesondere Gehäuse angeordnet sind, lässt sich ebenfalls eine Abschirmung nach außen realisieren, indem beispielsweise außen am Verbindungselement 2a eine geerdete leitfähige Schicht angebracht ist. Alternativ kann das ganze Verbindungselement aus leitfähigem Material hergestellt sein.

Wenn die Antennen eingegossen sind, sollte als Mantelmaterial ein thermoplastischer Kunststoff, wie z. B. Polyamid, Polyester oder Polyethylen verwendet werden. Aber auch Ein- oder Zweikomponenten-Vergussmasse, wie z. B. Epoxydharz, Polyesterharz, Vinylesterharz, Polyurethan, Silikonharz, Acrylharz, wahlweise mit Füllstoffen, wie z. B. Glasfaser, ist geeignet. Auch hier können die Kabel 8 in die Verbindungselemente eingegossen werden. Die Signalleitungen führen, wie aus der Fig. 16 hervorgeht, dann beispielsweise zu einem WLAN-Sender und -Empfänger, der mit einem Netzwerk-Interface-Controller verbunden ist.

Die in Fig. 16 gezeigte Anordnung kann nicht nur mit Funk, sondern auch mit vorzugsweise kohärentem Licht zur Datenübertragung genutzt werden (Wellenlänge 400 nm - 1000 nm). Dabei wird ein Optokoppler mit den jeweiligen Netzwerk-Interface-Controllern verbunden, wobei anstatt der Antenne 3a als Sender beispielsweise eine Laserdiode verwendet wird und als Empfänger 3b ein Fotodetektor, insbesondere ein Fototransistor oder eine PIN-Diode verwendet wird. Bei dieser Ausführungsform sind die Datenübertragungsteile 3a,b dann entweder nicht eingegossen oder aber in ein transparentes Medium, wie beispielsweise Acrylharz.

Weiterhin ist auch eine Kombination aus herkömmlicher, kontaktbehafteter Übertragung und kontaktloser bzw. drahtloser Übertragung, wie im Zusammenhang mit den Fig. 2 bis 16 gezeigt wurde, möglich. Dabei kann die Betriebsspannung über robuste Kontakte übertragen werden, während die Übertragung der Prozessdaten mittels der erfindungsgemäßen kontaktlosen Vorrichtungen bzw. Verfahren funktioniert. Es kann beispielsweise auch eine Datenübertragung kapazitiv und eine Energieübertragung induktiv oder umgekehrt erfolgen. Eine Kombination von verschiedenen drahtlosen, also galvanisch getrennten Übertragungsverfahren, wie sie in den verschiedenen Ausführungsbeispielen gezeigt wurden, ist ebenfalls möglich.

Bei allen Ausführungsbeispielen können die Verbindungselemente über Kabel 8 mit den jeweiligen Geräten verbunden werden. Es ist jedoch auch möglich, dass eines der Verbindungselemente in einem Gerät integriert ist, an das dann das weitere Verbindungselement "angesteckt" wird.

Bei dem erfindungsgemäßen Verfahren, bei dem zwei Geräte zur Datenübertragung miteinander an einer bestimmten Schnittstelle verbunden werden sollen, werden zunächst das erste und zweite Verbindungselement 2a,b über die Befestigungseinrichtung 4 miteinander verbunden, z.B. ineinander gesteckt, verschraubt, etc. Dann kann eine Datenübertragung vom ersten zum zweiten Verbindungselement galvanisch getrennt erfolgen, d.h. kontakt- und drahtlos.

## Patentansprüche

1. Fülllinie zur Wurstherstellung mit mehreren Geräten (10a,b), wobei mindestens zwei Geräte der Fülllinie mit einem Verbinder (1) miteinander zur Prozessdatenübertragung in Echtzeit verbunden sind, wobei das erste und zweite Gerät (10a,b) mindestens zwei aus folgender Gruppe sind:
Füllmaschine Abdreheinheit, Clipper, Hänger, Abteilelement, Transportband Handlingsgerät, Verpackungseinheit und mit einem Verbinder (1) umfassend:
ein erstes Verbindungselement (2a), das mit dem ersten Gerät (10a) verbindbar ist und mindestens ein erstes Datenübertragungsteil (3a) aufweist, und
ein zweites, mit dem ersten Verbindungselement koppelbares Verbindungselement (2b), das mit dem zweiten Gerät (10b) verbindbar ist und mindestens ein zweites Datenübertragungsteil (3b) aufweist,
wobei in gekoppeltem Zustand des ersten und zweiten Verbindungselements (2a,b) das erste Datenübertragungsteil (3a) von dem zweiten Datenübertragungsteil (3b) galvanisch getrennt ist, und zumindest eines der Verbindung elemente (2a,b) oder beide über ein Kabel (8) mit einem Gerät (10a,b) verbunden ist.

2. Fülllinie nach Anspruch 1, **dadurch gekennzeichnet, dass** der Verbinder (1) eine mechanische Befestigungseinrichtung (4) umfasst, die das erste Verbindungseleme (2a) mit dem zweiten Verbindungselement (2b) koppelt, insbesondere hermetisch dicht, wobei die mechanische Befestigungseinrichtung (4) insbesondere einen Schraubverschluss oder Steckverbindung oder Bajonettverschluss oder Klemmverschluss oder eine Kopplung mittels eines Permanentmagneten umfasst.

3. Fülllinie nach mindestens einem der vorhergehenden Ansprüche, **dadurch gekennzeichnet, dass** das erste und zweite Datenübertragungsteil (3a,b) in dem jeweiligen ersten und zweiten Verbindungselement (2a,b) hermetisch abgedichtet angeordnet ist.

4. Fülllinie nach mindestens einem der vorhergehenden Ansprüche, **dadurch gekennzeichnet, dass** das erste und zweite Datenübertragungsteil (3a,b) in ein Mantelmaterial, insbesondere einen thermoplastischen Kunststoff oder ein Kunstharz eingegossen ist.

5. Fülllinie nach mindestens einem der vorhergehenden Ansprüche, **dadurch gekennzeichnet, dass** das erste Verbindungselement (2a) als Datenübertragungsteil (3a,b) eine Primärspule (3a) umfasst und das zweite Verbindungselement (2b) als Datenübertragungsteil eine Sekundärspule (3b) umfasst, derart, dass die Daten induktiv übertragen werden.

6. Fülllinie nach Anspruch 5, **dadurch gekennzeichnet, dass** die Primärspule (3a) und Sekundärspule (3b) jeweils einer Hälfte eines Übertragers (5), dessen Kern, insbesondere Ringkern, aufgetrennt ist, entspricht, derart, dass die jeweiligen Stirnseiten (6) der getrennten Kerne (7a,b) der Primär- und Sekundärspule (3a,b) in gekoppeltem Zustand des ersten und zweiten Verbindungselements (2a,b) zueinander ausgerichtet sind.

7. Fülllinie nach mindestens einem der vorhergehenden Ansprüche, **dadurch gekennzeichnet, dass** das erste Verbindungselement (2a) und das zweite Verbindungselement (2b) derart ausgebildet sind, dass die Daten kapazitiv übertragen werden und wobei insbesondere das erste Verbindungselement als Datenübertragungsteil mindestens zwei erste Kondensatorelektroden (3a) und das zweite Verbindungselement als Datenübertragungsteil mindestens zwei zweite Kondensatorelektroden umfasst, wobei sich die ersten und zweiten Kondensatorelektrode im gekoppelten Zustand der Verbindungselemente (2a,b) gegenüberliegen.

8. Fülllinie nach Anspruch 7, **dadurch gekennzeichnet, dass** in dem ersten Verbindungselement (2a) mehrere Kondensatorelektroden flächig, insbesondere als flächige Ringe auf einem Träger, insbesondere einem Zylinder, angeordnet sind, und das zweite Verbindungselement als Hülse ausgebildet ist, die mehrere flächige, insbesondere als flächige Ringe ausgebildete Kondensatorelektroden aufweist, die in gekoppeltem Zustand der Verbindungselemente (2a,b) den ersten Kondensatorelektroden (3a) gegenüberliegen.

9. Fülllinie nach mindestens einem der Ansprüche 1 bis 8, **dadurch gekennzeichnet, dass** die Datenübertragung über elektromagnetische Wellen erfolgt und insbesondere entweder das erste Verbindungselement (2a) als Datenübertragungsteil eine Senderantenne (3a) umfasst und das zweite Verbindungselement (2b) als Datenübertragungsteil eine Empfängerantenne umfasst, oder das erste Verbindungselement (2a) und das zweite Verbindungselement (2b) als Datenübertragungsteil eine kombinierte Sender- und Empfängerantenne umfassen oder
als Sender und Empfänger ein Optokoppler vorgesehen ist.

10. Fülllinie nach mindestens einem der Ansprüche 1 bis 9, **dadurch gekennzeichnet, dass** das erste und zweite Verbindungselement (2a,b) jeweils mehrere Datenübertragungsteile (3a,b,c,d) für mehrere Übertragungspfade aufweisen, insbesondere mehrere Spulen, mehrere Kondensatorelektroden, mehrere Sender- und Empfängerantennen, optische Sender und Empfänger.

## Claims

1. Filling line for sausage production with several apparatuses (10a, b), wherein at least two apparatuses of the filling line are connected with each other with a connector for real time processdata transmission wherein the first and second apparatus (10a, b) are at least two of the following group:
filling machine, wring-off unit, clipper, hangup, separation element, conveying belt, handling apparatus, packing unit,
and with a connector (1) comprising:
a first connecting element (2a) which may be connected to the first apparatus (10a) and comprises at least one first data transmission part (3a), and
a second connecting element (2b) that may be coupled to the first connecting element and connected to the second apparatus (10b) and comprises at least one second data transmission part (3b),
wherein in the coupled state of the first and second connecting elements (2a, b), the first data transmission part (3a) is galvanically isolated from the second data transmission part (3b) and at least one of the connecting elements (2a, b) or both are connected with an apparatus (10a, b) via a cable (8).

2. Filling line according to claim 1, **characterized in that** the connector (1) comprises a mechanical fixing device (4) which couples the first connecting element (2a) with the second connecting element (2b), in particular in a hermetically tight manner, the mechanical fixing device (4) in particular comprising a screw closure or a pin-and-socket connection or a bayonet catch or a clamped closure or a coupling by means of a permanent magnet.

3. Filling line according to at least one of the preceding claims, **characterized in that** the first and second data transmission parts (3a, b) are disposed in the respective first and second connecting elements (2a, b) in a hermetically sealed manner.

4. Filling line according to at least one of the preceding claims, **characterized in that** the first and second data transmission parts (3a, b) are cast into a casing material, in particular a thermoplastic or synthetic resin.

5. Filling line according to at least one of the preceding claims, **characterized in that** the first connecting element (2a) as data transmission part (3a, b) comprises a primary coil (3a), and the second connecting element (2b) as data transmission part comprises a secondary coil (3b), such that the data are transmitted inductively.

6. Filling line according to claim 5, **characterized in that** the primary coil (3a) and the secondary coil (3b) each corresponds to one half of a transformer (5) whose core, in particular annular core, is split, such that the respective front sides (6) of the split cores (7a, b) of the primary and secondary coils (3a, b) are oriented so as to face each other in the coupled state of the first and second connecting elements (2a, 2b).

7. Filling line according to at least one of the preceding claims, **characterized in that** the first connecting element (2a) and the second connecting element (2b) are designed such that the data are transmitted capacitively, and wherein in particular the first connecting element as data transmission part comprises at least two first capacitor electrodes (3a), and the second connecting element as data transmission part comprises at least two second capacitor electrodes, the first and second capacitor electrodes facing each other in the coupled state of the connecting elements (2a, 2b).

8. Filling line according to claim 7, **characterized in that** in the first connecting element (2a), several capacitor electrodes are disposed planely, in particular as plane rings on a support, in particular a cylinder, and the second connecting element is designed as a sleeve which comprises several plane capacitor electrodes, in particular embodied as plane rings, which, in the coupled state of the connecting elements (2a, b) are located opposite the first capacitor electrodes (3a).

9. Filling line according to at least one of claims 1 to 8, **characterized in that** data transmission is effected via electromagnetic waves, and in particular either the first connecting element (2a) as data transmission part comprises a transmitting antenna (3a), and the second connecting element (2b) as data transmission part comprises a receiving antenna, or the first connecting element (2a) and the second connecting element (2b) as data transmission part comprise a combined transmitting and receiving antenna, or
an optocoupler is provided as transmitter and receiver.

10. Filling line according to at least one of claims 1 to 9, **characterized in that** the first and second connecting elements (2a, b) each comprise several data transmission parts (3a,b,c) for several transmission paths, in particular several coils, several capacitor electrodes, several transmitting and receiving antennae, optical transmitters and receivers.

## Revendications

1. Ligne de remplissage pour la fabrication de saucisses, comprenant plusieurs appareillages (10a,b), au moins deux appareillages de la ligne de remplissage étant reliés à l'aide d'un connecteur de liaison pour la transmission de données en temps réel, le premier et le deuxième appareillage (10a,b) étant deux appareillages parmi ceux du groupe suivant :
machine de remplissage, unité de torsion, appareil à clipper, appareillage de suspension, élément de subdivision, bande transporteuse, appareillage de manutention, unité d'emballage,
et le connecteur de liaison (1) comprenant :
un premier élément de connecteur de liaison (2a), qui peut être relié au premier appareillage (10a) et présente au moins une première partie de transmission de données (3a), et
un deuxième élément de connecteur de liaison (2b) pouvant être couplé au premier élément de connecteur de liaison, et qui peut être relié au deuxième appareillage (10b) et présente au moins une deuxième partie de transmission de données (3b),
ligne de remplissage dans laquelle, dans l'état couplé du premier et du deuxième élément de connecteur de liaison (2a,b), la première partie de transmission de données (3a) est isolée galvaniquement de la deuxième partie de transmission de données (3b), et au moins l'un des éléments de connecteur de liaison (2a,b) ou bien les deux, est relié ou sont reliés par l'intermédiaire d'un câble (8) à un appareillage (10a,b).

2. Ligne de remplissage selon la revendication 1, **caractérisée en ce que** le connecteur de liaison (1) comprend un dispositif de fixation mécanique (4), qui assure le couplage, notamment de manière hermétiquement étanche, du premier élément de connecteur de liaison (2a) avec le deuxième élément de connecteur de liaison (2), le dispositif de fixation mécanique (4) comprenant notamment un verrouillage à vis ou une liaison par emboitement, ou encore un verrouillage à baïonnette ou un verrouillage par serrage ou un couplage au moyen d'un aimant permanent.

3. Ligne de remplissage selon l'une au moins des revendications précédentes, **caractérisée en ce que** la première et la deuxième partie de transmission de données (3a,b) sont agencées, de manière hermétiquement étanche, respectivement dans le premier et le deuxième élément de connecteur de liaison (2a,b).

4. Ligne de remplissage selon l'une au moins des revendications précédentes, **caractérisée en ce que** la première et la deuxième partie de transmission de données (3a,b) sont noyées par moulage dans un matériau d'enveloppe, notamment une matière plastique thermoplastique ou une résine synthétique.

5. Ligne de remplissage selon l'une au moins des revendications précédentes, **caractérisée en ce que** le premier élément de connecteur de liaison (2a) comporte, en guise de partie de transmission de données (3a,b), une bobine primaire (3a), et le deuxième élément de connecteur de liaison (2b) comporte, en guise de partie de transmission de données, une bobine secondaire (3b), de manière à ce que les données soient transmises par voie inductive.

6. Ligne de remplissage selon la revendication 5, **caractérisée en ce que** la bobine primaire (3a) et la bobine secondaire (3b) correspondent chacune à la moitié d'un transmetteur (5) dont le noyau, notamment noyau annulaire, est scindé en deux de façon telle, que les côtés frontaux (6) respectif des noyaux scindés (7a,b) de la bobine primaire et secondaire (3a,b) soient mutuellement alignés, dans l'état couplé du premier et du deuxième élément de connecteur de liaison (2a,b).

7. Ligne de remplissage selon l'une au moins des revendications précédentes, **caractérisée en ce que** le premier élément de connecteur de liaison (2a) et le deuxième élément de connecteur de liaison (2b) sont conçus de manière à ce que les données soient transmises par voie capacitive, et le premier élément de connecteur de liaison comportant notamment, en guise de partie de transmission de données, au moins deux premières électrodes de condensateur (3a), et le deuxième élément de connecteur de liaison comportant, en guise de partie de transmission de données, au moins deux deuxièmes électrodes de condensateur, les premières et deuxièmes électrodes de condensateur étant mutuellement opposées dans l'état couplé des éléments de connecteur de liaison (2a,b).

8. Ligne de remplissage selon la revendication 7, **caractérisée en ce que** dans le premier élément de connecteur de liaison (2a), plusieurs électrodes de condensateur sont agencées en surface, notamment sous forme d'anneaux minces, sur un support, notamment un cylindre, et le deuxième élément de connecteur de liaison est réalisé sous la forme d'un manchon, qui présente plusieurs électrodes de condensateur minces, notamment sous la forme d'anneaux minces, qui, dans l'état couplé des éléments de connecteur de liaison (2a, b) sont en regard des premières électrodes de condensateur (3a).

9. Ligne de remplissage selon l'une au moins des revendications 1 à 8, **caractérisée en ce que** la transmission de données est effectuée par l'intermédiaire d'ondes électromagnétiques, et notamment en ce que le premier élément de connecteur de liaison (2a) comporte une antenne d'émetteur (3a) en guise de partie de transmission de données, et le deuxième élément de connecteur de liaison (2b) comporte une antenne de récepteur en guise de partie de transmission de données, ou bien le premier élément de connecteur de liaison (2a) et le deuxième élément de connecteur de liaison (2b) comportent en guise de partie de transmission de données, une antenne combinée d'émetteur et de récepteur, ou bien il est prévu un optocoupleur en guise d'émetteur et de récepteur.

10. Ligne de remplissage selon l'une au moins des revendications 1 à 9, **caractérisée en ce que** le premier et le deuxième élément de connecteur de liaison (2a,b) présentent chacun plusieurs parties de transmission de données (3a,b,c,d) pour plusieurs canaux de transmission, notamment plusieurs bobines, plusieurs électrodes de condensateur, plusieurs antennes d'émetteur et de récepteur, des émetteurs et récepteurs optiques.
